# DEMANDE DE BREVET EUROPEEN

(11) **EP 4 575 729 A1**
(43) Date de publication de la demande: **25.06.2025**
(21) Numéro de dépôt: 24221280.1
(22) Date de dépôt: 18.12.2024
(51) Int. Cl.: G06F 3/01

(54) **PROCEDE DE COMMANDE D'UN APPAREIL ELECTROMENAGER**

(30) Priorité: 21.12.2023 FR 2314764
(71) Demandeur: Groupe Brandt, 92500 Rueil-Malmaison (FR)
(72) Inventeur: RICHOU, Philippe, 45000 ORLEANS (FR); LORIDE, Antoine, 45000 ORLEANS (FR); BUGEIA, Jean-Marc, 45130 MEUNG SUR LOIRE (FR); VAUTRIN, Cédric, 45800 SAINT JEAN DE BRAYE (FR); OUDART, Pascal, 45240 LA FERTE SAINT AUBIN (FR)
(74) Mandataire: Santarelli

(57) **Abrégé**

L'invention concerne un procédé (100) de commande d'un appareil électroménager (9) par le biais d'une interface homme-machine (90) adaptée à commander ledit appareil électroménager (9) en réponse à un geste effectué par au moins une main d'un utilisateur,
ladite interface homme-machine (90) comprenant :
- un module d'acquisition (900) configuré pour détecter un geste effectué par ladite au moins une main, ledit geste étant composé d'au moins un mouvement effectué en au moins un temps donné, et configuré pour comparer ledit geste détecté avec une pluralité de séquences prédéterminées, chacune desdites séquences prédéterminées correspondant à une instruction de commande respective dudit appareil électroménager (9), chacune desdites séquences prédéterminées comprenant au moins un mouvement prédéterminé à réaliser dans un laps de temps prédéterminé ;
- un module de commande (901) configuré pour délivrer ladite instruction de commande respective dudit appareil électroménager (9) si ledit geste détecté est effectué dans une zone de détection prédéfinie (8) et si ledit geste détecté correspond à une desdites séquence prédéterminées,

caractérisé en ce que ladite pluralité de séquences prédéterminées comprend un premier groupe (G1) de séquences prédéterminées et un deuxième groupe (G2) de séquences prédéterminées,
et en ce que ladite interface homme-machine est réglable entre au moins trois niveaux de détection.

## Description

### Domaine de l'invention

La présente invention se rapporte au domaine des appareils électroménagers, et plus particulièrement des appareils électroménagers domestiques.

L'invention concerne plus particulièrement un procédé de commande d'un tel appareil électroménager par le biais d'une interface homme-machine adaptée à commander ledit appareil électroménager en réponse à un geste effectué par au moins une main d'un utilisateur.

### Etat de la technique antérieure

Les appareils électroménagers domestiques, comme les plaques de cuisson, les fours de cuisson domestiques, les lave-linge ou encore les lave-vaisselle, etc. présentent généralement un carter principal logeant des composants permettant à l'appareil électroménager de remplir sa fonction, et une interface homme-machine qui peut être disposée dans un plan parallèle à la face frontale de l'appareil électroménager, c'est-à-dire dans un plan parallèle à la face frontale du carter.

Cette interface homme-machine peut, de manière connue, être commandée avec ou sans contact de la part d'un utilisateur. En d'autres termes, un utilisateur peut commander une interface homme-machine en appuyant sur des boutons prévus à cet effet tels que des boutons définis sur un écran tactile, ou peut effectuer un geste à distance qui sera détecté par l'interface homme-machine.

Par exemple, le document CH700524 décrit un appareil électroménager domestique comprenant une unité d'entrée sans contact conçue pour distinguer les différentes trajectoires d'une main d'utilisateur et pour générer différents signaux en fonction des trajectoires.

On connait également le document EP2806334 qui décrit une méthode d'exploitation d'une interface utilisateur contrôlée sur la base d'un geste.

Ainsi, avec de telles solutions, un utilisateur peut commander son appareil électroménager domestique sans pour autant avoir besoin de toucher cet appareil électroménager domestique.

Toutefois, un inconvénient de telles solutions est que l'unité d'entrée sans contact peut être amenée à détecter des trajectoires d'une main d'utilisateur qui correspondraient à du bruit provenant par exemple d'une personne passant à proximité et effectuant un mouvement sans pour autant vouloir commander l'appareil électroménager domestique, ou un enfant qui ferait des gestes devant l'unité d'entrée sans contact.

En outre, il peut s'avérer complexe pour certains utilisateurs de commander un tel appareil électroménager domestique du fait que la comparaison d'une trajectoire réalisée par la main d'un utilisateur par rapport à une trajectoire engendrant un signal peut s'avérer difficile à réaliser si la trajectoire réalisée comprend des mouvements complexes.

Par ailleurs, il peut s'avérer utile de limiter certaines fonctions de commande selon l'utilisateur qui va commander l'appareil, ce pour des questions d'autorisation voire de sécurité.

Il existe donc un besoin de fournir une solution permettant d'optimiser la commande de tels appareils électroménagers domestiques, et notamment de simplifier la commande à distance, ou sans contact, de tels appareils électroménagers domestiques, en limitant les utilisations non désirées ou non autorisées.

### Exposé de l'invention

L'invention a pour but de remédier au moins en partie aux inconvénients mentionnés ci-dessus relatifs aux techniques de l'art antérieur.

Pour ce faire, l'invention concerne un procédé de commande d'un appareil électroménager par le biais d'une interface homme-machine adaptée à commander ledit appareil électroménager en réponse à un geste effectué par au moins une main d'un utilisateur, ladite interface homme-machine comprenant :
- un module d'acquisition configuré pour détecter un geste effectué par ladite au moins une main, ledit geste étant composé d'au moins un mouvement effectué en au moins un temps donné, et configuré pour comparer ledit geste détecté avec une pluralité de séquences prédéterminées, chacune desdites séquences prédéterminées correspondant à une instruction de commande respective dudit appareil électroménager, chacune desdites séquences prédéterminées comprenant au moins un mouvement prédéterminé à réaliser dans un laps de temps prédéterminé ;
- un module de commande configuré pour délivrer ladite instruction de commande respective dudit appareil électroménager si ledit geste détecté est effectué dans une zone de détection prédéfinie et si ledit geste détecté correspond à une desdites séquence prédéterminées.

Selon l'invention, ladite pluralité de séquences prédéterminées comprend un premier groupe de séquences prédéterminées et un deuxième groupe de séquences prédéterminées. En outre, ladite interface homme-machine est réglable entre au moins trois niveaux de détection :
- un premier niveau de détection dans lequel ledit module de commande est désactivé, ladite interface homme-machine ne délivrant pas d'instruction de commande dudit appareil électroménager ;
- un deuxième niveau de détection dans lequel ledit module de commande est activé, ladite interface homme-machine étant apte à délivrer une instruction de commande dudit appareil électroménager si ledit geste détecté correspond à une desdites séquences prédéterminées dudit premier groupe de séquences prédéterminées, et
- un troisième niveau de détection dans lequel ledit module de commande est activé, ladite interface homme-machine étant apte à délivrer une instruction de commande dudit appareil électroménager si ledit geste détecté correspond à une desdites séquences prédéterminées dudit premier groupe de séquences prédéterminées et/ou dudit deuxième groupe de séquences prédéterminées.

Ainsi, la solution propose une approche nouvelle et invention permettant de résoudre au moins en partie certains des inconvénients de l'art antérieur.

Notamment, une telle solution permet de simplifier la commande à distance, ou sans contact, de tels appareils électroménagers domestiques, en limitant les utilisations non désirées ou non autorisées.

Par exemple, la solution proposée permet de n'autoriser que certains utilisateurs à accéder aux gestes du deuxième groupe, lorsque l'appareil électroménager est au premier ou deuxième niveau.

La mise en oeuvre de ces niveaux permet d'ajouter également un niveau de sécurité du fait que si l'on souhaite désactiver la détection de gestes particuliers ou de gestes pendant un temps donné, on peut régler l'interface homme-machine au premier niveau. On évite ainsi les risques de détecter des trajectoires d'une main d'utilisateur qui correspondraient à du bruit provenant par exemple d'une personne passant à proximité et effectuant un mouvement sans pour autant vouloir commander l'appareil électroménager domestique, ou un enfant qui ferait des gestes devant l'unité d'entrée sans contact. Par exemple, pour une table de cuisson, un parent peut régler l'interface homme machine au premier niveau de sorte que si un enfant passe à proximité et effectue un geste qui aurait pu être interprété comme étant un geste de commande, aucune délivrance d'instruction de commande ne soit effectuée.

Selon un aspect particulier d'au moins un mode de réalisation de l'invention, ladite zone de détection prédéfinie présente une forme pyramidale s'étendant entre un sommet porté par ladite interface homme-machine et une base située à une distance normale au sommet comprise entre 30 et 70 cm, préférentiellement 50 cm, la base s'étendant sur une longueur comprise entre 20cm et 40cm, préférentiellement 30cm, la base s'étendant sur une largueur comprise entre 20cm et 40cm, préférentiellement 30cm, la base étant centrée sur la normale à la interface homme machine.

Les dimensions de la zone de détection présentent également l'avantage de limiter la détection de gestes provenant d'une main d'utilisateur qui correspondraient à du bruit provenant par exemple d'une personne passant à proximité, d'un enfant, ou d'une personne qui exécuterait des opérations, par exemple de cuisine pour une table de cuisson ou de tri de linge pour un lave-linge, et qui ferait donc de nombreux gestes sans pour autant avoir le souhait que ces gestes soient pris en compte par l'interface homme-machine.

Selon un aspect particulier d'au moins un mode de réalisation de l'invention, ledit module d'acquisition est configuré pour transmettre audit module de commande lesdites séquences prédéterminées détectables en fonction dudit réglage du niveau de détection de ladite interface homme-machine.

Selon un aspect particulier d'au moins un mode de réalisation de l'invention, dans lesdits deuxième niveau de détection et troisième niveau de détection, le module de commande est activé suite à la détection d'un geste correspondant à une séquence prédéfinie de demande de réglage, ledit geste étant réalisé par ladite au moins une main dans ladite zone de détection prédéfinie.

Selon un aspect particulier d'au moins un mode de réalisation de l'invention, ladite séquence prédéterminée de demande de réglage comprend :
- une première partie de geste détecté dans laquelle le mouvement consiste en un rapprochement vers ladite interface homme-machine depuis une distance normale à ladite interface homme-machine supérieure à 200mm jusqu'à une distance normale à ladite interface homme-machine comprise entre 8mm et 200mm, puis
- une deuxième partie de geste détecté dans laquelle le mouvement consiste en un écartement de ladite interface homme-machine jusqu'à une distance normale à ladite interface homme-machine maximale inférieure 200mm en un temps compris entre 50ms et 750ms, puis
- une troisième partie de geste détecté dans laquelle ledit mouvement consiste en un rapprochement vers ladite interface homme-machine jusqu'à une distance normale à ladite interface homme-machine minimale supérieure à 8mm en un temps compris entre 50ms et 750ms, puis
- une quatrième partie de geste détecté dans laquelle le mouvement consiste en un écartement de ladite interface homme-machine d'une distance normale à ladite interface homme-machine depuis une distance comprise entre 8mm et 200mm jusqu'à une distance normale à ladite interface homme-machine supérieure à 200mm.

Selon un aspect particulier d'au moins un mode de réalisation de l'invention, le premier groupe de séquences prédéterminées comprend des séquences prédéterminées dans lesquelles le au moins un mouvement prédéterminé est exclusivement rectiligne et comprend un écartement de ladite interface homme-machine d'une distance normale à ladite interface homme-machine comprise entre 150mm et 350mm et/ou un rapprochement de ladite interface homme-machine d'une distance normale à ladite interface homme-machine comprise entre 150mm et 350mm et/ou un mouvement rectiligne dans un plan parallèle à ladite interface homme-machine.

Selon un aspect particulier d'au moins un mode de réalisation de l'invention, ledit premier groupe de séquences prédéterminées comprend :
- une fonction d'urgence de l'appareil électroménager ;
- un réglage d'un niveau de puissance ;
- un réglage de temps ;
- un réglage d'un paramètre ;
- un choix de programme ;
- une opération de l'interface de commande ;
- une sélection d'un élément de l'appareil électroménager.

Selon un aspect particulier d'au moins un mode de réalisation de l'invention, le deuxième groupe de séquences prédéterminées comprend des séquences prédéterminées dans lesquelles le au moins un mouvement prédéterminé est au moins partiellement rotatif par rapport à un axe normal à ladite interface homme-machine à une distance normale à ladite interface homme-machine comprise entre 150mm et 300mm.

De ce fait, le deuxième groupe de séquences prédéterminées peut comprendre des séquences prédéterminées plus complexes avec des combinaisons de rotation et de mouvements rectilignes, ce qui permet d'avoir un nombre plus important de commandes de l'appareil électroménager.

Selon un aspect particulier d'au moins un mode de réalisation de l'invention, ledit deuxième groupe de séquences prédéterminées comprend ledit premier groupe de séquences prédéterminées et comprend en outre :
- un changement de paramètre à régler ;
- un réglage d'une minuterie.
- un choix de programme d'utilisation de l'appareil électroménager.

L'invention concerne également une interface homme-machine destinée à mettre en oeuvre un procédé de commande d'un appareil électroménager selon l'un des modes de réalisation précités, adaptée à commander ledit appareil électroménager en réponse à un geste effectué par au moins une main d'un utilisateur ladite interface homme-machine comprenant :
- un module d'acquisition muni d'un capteur temps de vol et d'un microprocesseur;
- un module de commande configuré pour délivrer ladite instruction de commande dudit appareil électroménager, et
- un module de stockage de séquences prédéterminées.

Selon différents modes de réalisation, le capteur temps de vol (ou ToF en anglais pour Time of Flight) peut par exemple comprendre une caméra temps de vol, un système Radar, c'est-à-dire par détection par ondes, ou un système Lidar, c'est-à-dire détection par laser.

Selon un aspect particulier d'au moins un mode de réalisation de l'invention, l'interface homme-machine comprend un dispositif d'affichage et/ou de saisie pour un utilisateur.

L'invention concerne un appareil électroménager comprenant une interface homme-machine selon l'un des modes de réalisation précités.

Selon un aspect particulier d'au moins un mode de réalisation de l'invention, ledit appareil ménager appartenant au groupe comprenant :
- une table de cuisson ;
- un four ;
- un lave-linge ;
- un lave-vaisselle ;
- une hotte.

### Présentation des figures

L'invention, ainsi que les différents avantages qu'elle présente, seront plus facilement compris à la lumière de la description qui va suivre d'un mode de réalisation illustratif et non limitatif de celle-ci, et des dessins annexés parmi lesquels :
[Fig. 1] est une vue schématique d'une interface homme-machine selon un mode de réalisation de l'invention ;
[Fig. 2] est une vue schématique d'une zone de détection selon un mode de réalisation de l'invention ;
[Fig. 3] est une vue schématique d'un procédé de commande selon un mode de réalisation de l'invention, et
[Fig. 4] est une représentation schématique d'un geste à détecter pour délivrer une instruction de commande correspondant à un réglage de paramètre.

### Description détaillée d'un mode de réalisation de l'invention

Les éléments identiques représentés sur les figures précitées sont identifiés par des références numériques identiques.

L'invention concerne un procédé 100 de commande d'un appareil électroménager 9.

Cet appareil électroménager, ou appareil électroménager domestique, peut notamment appartenir au groupe comprenant :
- une table de cuisson ;
- un four ;
- un lave-linge ;
- un lave-vaisselle ;
- une hotte.

Le procédé 100 de commande d'un appareil électroménager se fait donc par le biais d'une interface homme-machine 90 adaptée à commander cet appareil électroménager 9 en réponse à un geste effectué par au moins une main d'un utilisateur.

Cette commande de l'appareil électroménager se fait sans contact entre l'utilisateur et l'interface homme-machine 90.

En d'autres termes, cette commande de l'appareil électroménager se fait à distance, c'est-à-dire avec une distance non nulle entre la main d'un utilisateur et l'interface homme-machine 90.

Il est à noter que selon des variantes de réalisation, l'appareil électroménager peut toutefois conserver une partie des contrôles activables par contact de l'utilisateur avec des moyens de commandes ménagés sur l'interface homme-machine.

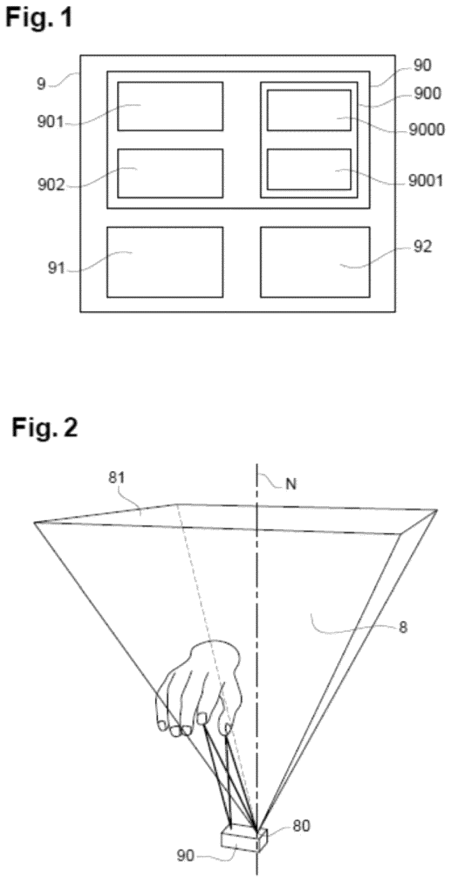

Une telle interface homme machine 90 peut comprendre, comme illustré en figure 1, un module d'acquisition 900, un module de commande 901, et un module de stockage 902.

Le module d'acquisition 900 est configuré pour détecter un geste effectué par la au moins une main, pour comparer ce geste détecté avec une pluralité de séquences prédéterminées.

Selon la solution proposée, chacune des séquences prédéterminées correspond à une instruction de commande respective de l'appareil électroménager 9. Chacune de ces séquences prédéterminées comprend au moins un mouvement prédéterminé à réaliser dans un laps de temps prédéterminé.

Le module d'acquisition comprend, dans le mode de réalisation illustré, un capteur temps de vol 9000 et un microprocesseur 9001.

Le capteur temps de vol (ou ToF en anglais pour Time of Flight) peut par exemple comprendre une caméra temps de vol, un système Radar, c'est-à-dire par détection par ondes, ou un système Lidar, c'est-à-dire détection par laser.

Le module de stockage 902 est configuré pour stocker les différentes séquences prédéterminées qui seront comparées avec le geste détecté par le module d'acquisition.

Quant au module de commande 901, il est ici configuré pour délivrer l'instruction de commande de l'appareil électroménager.

Cette instruction de commande respective de l'appareil électroménager 9 est délivrée si le geste détecté est effectué dans une zone de détection prédéfinie 8 et si le geste détecté correspond à une des séquences prédéterminées.

Ce module de commande 901 est configurable par l'utilisateur afin de régler le niveau de détection en fonction de l'usage voulu par l'utilisateur. Ce réglage peut être effectué par l'intermédiaire du dispositif d'affichage et/ou de saisie 92 pour un utilisateur.

Dans le mode de réalisation présenté, et comme visible en figure 2, la zone de détection prédéfinie 8 présente ici une forme pyramidale s'étendant entre un sommet 80 porté par l'interface homme-machine 90 et une base 81 située à une distance normale au sommet 80 comprise entre 30 et 70 cm, préférentiellement 50 cm, la base 81 s'étendant sur une longueur comprise entre 20cm et 40cm, préférentiellement 30cm, la base 81 s'étendant sur une largueur comprise entre 20cm et 40cm, préférentiellement 30cm, la base 81 étant centrée sur la normale N à l'interface homme machine 90.

De telles dimensions de la zone de détection présentent l'avantage de limiter la détection de gestes provenant d'une main d'utilisateur qui correspondraient à du bruit provenant par exemple d'une personne passant à proximité, d'un enfant, ou d'une personne qui exécuterait des opérations.

Par exemple, dans le cas d'une table de cuisson, un utilisateur doit régulièrement effectuer des gestes pour cuisiner. Dans le cas d'un four, l'ouverture ou la fermeture de la porte ainsi que le fait de déplacer une grille de four pourraient être autant de gestes qui pourraient générer du bruit. Dans le cas d'un lave-linge, le fait de trier le linge à mettre ou l'ouverture et la fermeture du hublot pourraient également être des gestes qui pourraient générer du bruit.

Dans d'autres modes de réalisation, on pourrait prévoir une zone de détection prédéfinie présentant une autre forme, tel qu'une forme cylindrique, une forme rectangulaire.

On pourrait également prévoir une zone de détection multiple, avec une interface homme-machine présentant plusieurs capteurs temps de vol.

Il est à noter que le geste effectué par la au moins une main présente une composante spatiale qui peut être bidimensionnelle ou tridimensionnelle, à savoir le mouvement, et une composante spatiale, à savoir le temps donné.

Comme illustré en figure 1, l'interface homme-machine 90 comprend en outre un dispositif d'affichage et/ou de saisie 92 pour un utilisateur, de sorte à pouvoir communiquer avec l'utilisateur.

Cette interface homme-machine 90 est adaptée à commander l'appareil électroménager au moyen d'un procédé 100 de commande d'un appareil électroménager 9 en réponse à un geste effectué par au moins une main d'un utilisateur.

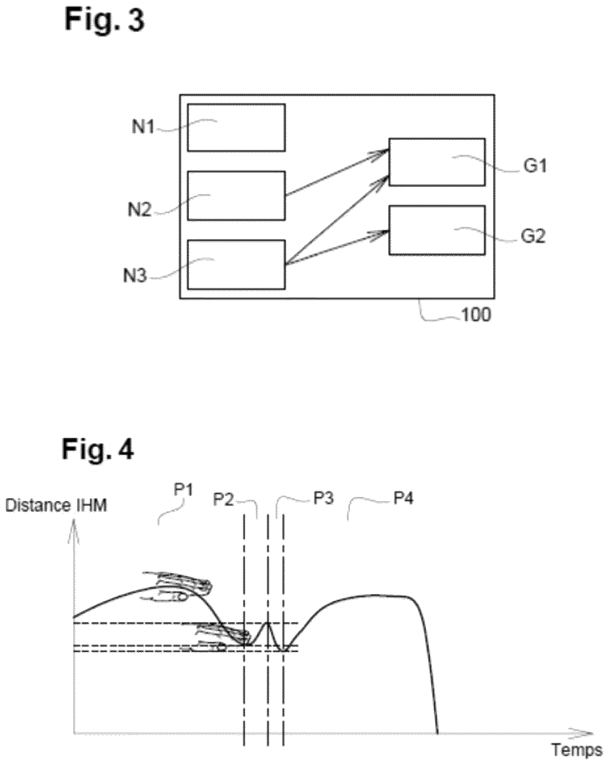

Comme illustré en figure 3, dans ce procédé de commande, la pluralité de séquences prédéterminées comprend un premier groupe G1 de séquences prédéterminées et un deuxième groupe G2 de séquences prédéterminées.

Plus particulièrement, dans ce mode de réalisation, le premier groupe G1 de séquences prédéterminées comprend des séquences prédéterminées dans lesquelles le au moins un mouvement prédéterminé est exclusivement rectiligne et comprend un écartement de l'interface homme-machine 90 d'une distance normale à l'interface homme-machine 90 comprise entre 150mm et 350mm et/ou un rapprochement de l'interface homme-machine 90 d'une distance normale à l'interface homme-machine 90 comprise entre 150mm et 350mm et/ou un mouvement rectiligne dans un plan parallèle à l'interface homme-machine 90.

En d'autres termes, ce premier groupe G1 comprend des séquences prédéterminées dans lesquels le ou les mouvements sont simples, et comprennent un ou plusieurs mouvements rectilignes.

Ce premier groupe G1 de séquences prédéterminées comprend ici :
- une fonction d'urgence de l'appareil électroménager ;
- un réglage d'un niveau de puissance ;
- un réglage de temps ;
- un réglage d'un paramètre ;
- un choix de programme ;
- une opération de l'interface de commande ;
- une sélection d'un élément de l'appareil électroménager.

Quant au deuxième groupe G2 de séquences prédéterminées, il comprend des séquences prédéterminées dans lesquelles le au moins un mouvement prédéterminé est au moins partiellement rotatif par rapport à un axe normal à l'interface homme-machine 90 à une distance normale à l'interface homme-machine 90 comprise entre 150mm et 300mm.

En d'autres termes, ce deuxième groupe G2 comprend des séquences prédéterminées dans lesquels le ou les mouvements sont plus complexes, et comprennent un ou plusieurs mouvements courbes.

Ce deuxième groupe G2 pourrait ainsi correspondre à un groupe de séquences prédéterminées pour un utilisateur expérimenté, ou à un groupe de séquences liées à des fonctionnalités moins fréquentes, tandis que le premier groupe G1 pourrait correspondre à un groupe de séquences prédéterminées pour un utilisateur débutant, ou à un groupe de séquences liées à des fonctionnalités très utilisées de l'appareil électroménager.

Ce deuxième groupe G2 de séquences prédéterminées comprend ici le premier groupe G1 de séquences prédéterminées, et comprend en outre :
- un changement de paramètre à régler ;
- un réglage d'une minuterie.
- un choix de programme d'utilisation de l'appareil électroménager.

Les exemples de séquences prédéterminées appartenant au premier groupe G1 ou au deuxième groupe G2 ne sont que des exemples non limitatifs de séquences prédéterminées pour ces deux groupes.

Par exemple, on pourrait également prévoir des séquences prédéterminées impliquant deux mains d'un utilisateur.

On pourrait également prévoir un troisième groupe comprenant ces séquences prédéterminées impliquant deux mains d'un utilisateur.

On pourrait également prévoir un autre groupe permettant à un utilisateur d'apprendre la gestuelle de commande d'un appareil électroménager.

Selon l'invention, l'interface homme-machine est réglable entre au moins trois niveaux de détection :
- un premier niveau de détection N1 dans lequel le module de commande 901 est désactivé, l'interface homme-machine 90 ne délivrant pas d'instruction de commande de l'appareil électroménager 9 ;
- un deuxième niveau de détection N2 dans lequel le module de commande 901 est activé, l'interface homme-machine 90 étant apte à délivrer une instruction de commande de l'appareil électroménager 9 si le geste détecté correspond à une des séquences prédéterminées du premier groupe G1 de séquences prédéterminées, et
- un troisième niveau de détection N3 dans lequel le module de commande 901 est activé, l'interface homme-machine 90 étant apte à délivrer une instruction de commande de l'appareil électroménager 9 si le geste détecté correspond à une des séquences prédéterminées du premier groupe G1 de séquences prédéterminées et/ou du deuxième groupe G2 de séquences prédéterminées.

Selon le mode de réalisation illustré, dans le deuxième niveau de détection N2 et le troisième niveau de détection N3, le module de commande 901 est activé suite à la détection d'un geste correspondant à une séquence prédéfinie de demande de réglage, le geste étant réalisé par la au moins une main dans la zone de détection prédéfinie 8.

La détection d'un tel geste afin d'activer le module de commande permet d'ajouter une sécurité supplémentaire, par exemple pour éviter que des enfants puissent utiliser l'appareil électroménager.

On présente maintenant, en relation avec la figure 4, un mode de réalisation d'un geste à détecter pour délivrer une instruction de commande correspondant à une demande de réglage selon un mode de réalisation de l'invention.

Comme illustré schématiquement sur cette figure 4, l'instruction de commande correspond à une demande de réglage si le geste détecté comprend quatre parties se présentant comme suit :
- une première partie P1 de geste détecté dans laquelle le mouvement consiste en un rapprochement vers l'interface homme-machine 90 depuis une distance normale à l'interface homme-machine 90 supérieure à 200mm jusqu'à une distance normale à l'interface homme-machine 90 comprise entre 8mm et 200mm, puis
- une deuxième partie P2 de geste détecté dans laquelle le mouvement consiste en un écartement de l'interface homme-machine 90 jusqu'à une distance normale à l'interface homme-machine 90 maximale inférieure 200mm en un temps compris entre 50ms et 750ms, puis
- une troisième partie P3 de geste détecté dans laquelle le mouvement consiste en un rapprochement vers l'interface homme-machine 90 jusqu'à une distance normale à l'interface homme-machine 90 minimale supérieure à 8mm en un temps compris entre 50ms et 750ms, puis
- une quatrième partie P4 de geste détecté dans laquelle le mouvement consiste en un écartement de l'interface homme-machine 90 d'une distance normale à l'interface homme-machine 90 depuis une distance comprise entre 8mm et 200mm jusqu'à une distance normale à l'interface homme-machine 90 supérieure à 200mm.

En d'autres termes, l'instruction de commande correspond à une demande de réglage si le geste comprend un rapprochement jusqu'à une distance prédéterminée de l'interface homme-machine, puis un écartement de l'interface homme-machine d'une distance prédéterminée dans un laps de temps prédéterminé, puis un rapprochement de l'interface homme-machine d'une distance prédéterminée dans un laps de temps prédéterminé, pour se finir par un écartement jusqu'à une distance prédéterminée de l'interface homme-machine.

Il est à noter que, dans ce mode de réalisation, le module d'acquisition 900 est configuré pour détecter et transmettre au module de commande 901 les séquences prédéterminées détectables en fonction dudit réglage du niveau de détection de l'interface homme-machine 90. De ce fait, si l'interface homme-machine est réglée au premier niveau de détection N1, le module d'acquisition 900 ne détecte pas et ne transmet pas de séquence prédéterminée détectable au module de commande 901.

On pourrait toutefois prévoir que le premier niveau de réglage de l'interface homme-machine comprenne à minima la détection d'un geste d'urgence de sorte à émettre une instruction de commande d'extinction d'urgence.

Si l'interface homme-machine est réglée au deuxième niveau de détection N2, le module d'acquisition 900 détecte et transmets des séquences prédéterminées détectables au module de commande correspondant au premier groupe G1 de séquences prédéterminées, avec donc des séquences prédéterminées dans lesquelles le ou les mouvements sont simples, et comprennent un ou plusieurs mouvements rectilignes.

Si l'interface homme-machine est réglée au troisième niveau de détection N3, le module d'acquisition 900 détecte et transmets des séquences prédéterminées détectables au module de commande correspondant au premier groupe G1 de séquences prédéterminées et au deuxième groupe G2 de séquences prédéterminées, avec donc à la fois des séquences prédéterminées dans lesquelles le ou les mouvements sont simples et comprennent un ou plusieurs mouvements rectilignes, et des séquences prédéterminées dans lesquelles le ou les mouvements sont plus complexes et comprennent un ou plusieurs mouvements courbes.

Un tel fonctionnement de l'interface homme-machine permet au module d'acquisition 900 de filtrer la détection de geste et ainsi d'éliminer des gestes parasites qui ne sont pas attendus au niveau de détection défini, mais aussi d'accepter des gestes avec une plus grande tolérance dans les bas niveaux de détection définis et resserrer la tolérance dans les niveaux de détection plus élevés pour mieux discriminer les gestes. Plus le niveau de détection est élevé, plus le nombre de gestes est important et plus les gestes sont complexes à exécuter. Avec ce principe de réglage du niveau de détection en fonction du niveau de dextérité de l'utilisateur, le système s'assure de délivrer la commande souhaitée par l'utilisateur.

Le module d'acquisition est configurable par le module de commande en fonction du niveau de détection voulu par l'utilisateur et réglé par ce dernier au niveau du module de commande. De ce fait, le module de commande envoie l'information de réglage de niveau et de gestes attendus directement au module d'acquisition.

Cela permet de limiter les échanges de données entre le module d'acquisition et le module de commande, ce qui augmente la réactivité de l'interface homme-machine.

Une méthode pour filtrer la détection de geste est l'utilisation d'une marge de tolérance sur la détection du geste. Il est ainsi prévu, selon le niveau de détection de l'interface homme-machine, une marge de tolérance sur la précision du geste à effectuer par la main d'un utilisateur, avec, par exemple, pour chaque séquence prédéterminée, un écart prédéfinie par rapport à la trajectoire théorique du geste (par exemple une trajectoire rectiligne ou une trajectoire circulaire), une marge prédéfinie pour la distance à l'interface homme-machine ou la distance dans l'espace par rapport à la trajectoire théorique et une marge prédéfinie pour le laps de temps prédéterminé. Par exemple, on pourrait prévoir une marge de tolérance comprise entre 10 et 25% si l'interface homme-machine est réglée au deuxième niveau de détection N2, et une marge de tolérance comprise entre 0 et 10% si l'interface homme-machine est réglée au troisième niveau de détection N3. On aurait ainsi une interface homme-machine dans laquelle plus le niveau de détection est élevé, plus le nombre de gestes est important et plus les gestes doivent être précis pour pouvoir être bien détectés.

## Revendications

1. Procédé (100) de commande d'un appareil électroménager (9) par le biais d'une interface homme-machine (90) adaptée à commander ledit appareil électroménager (9) en réponse à un geste effectué par au moins une main d'un utilisateur,
ladite interface homme-machine (90) comprenant :
- un module d'acquisition (900) configuré pour détecter un geste effectué par ladite au moins une main, ledit geste étant composé d'au moins un mouvement effectué en au moins un temps donné, et configuré pour comparer ledit geste détecté avec une pluralité de séquences prédéterminées, chacune desdites séquences prédéterminées correspondant à une instruction de commande respective dudit appareil électroménager (9), chacune desdites séquences prédéterminées comprenant au moins un mouvement prédéterminé à réaliser dans un laps de temps prédéterminé ;
- un module de commande (901) configuré pour délivrer ladite instruction de commande respective dudit appareil électroménager (9) si ledit geste détecté est effectué dans une zone de détection prédéfinie (8) et si ledit geste détecté correspond à une desdites séquence prédéterminées,
**caractérisé en ce que** ladite pluralité de séquences prédéterminées comprend un premier groupe (G1) de séquences prédéterminées et un deuxième groupe (G2) de séquences prédéterminées,
et **en ce que** ladite interface homme-machine est réglable entre au moins trois niveaux de détection :
- un premier niveau de détection (N1) dans lequel ledit module de commande (901) est désactivé, ladite interface homme-machine (90) ne délivrant pas d'instruction de commande dudit appareil électroménager (9) ;
- un deuxième niveau de détection (N2) dans lequel ledit module de commande (901) est activé, ladite interface homme-machine (90) étant apte à délivrer une instruction de commande dudit appareil électroménager (9) si ledit geste détecté correspond à une desdites séquences prédéterminées dudit premier groupe (G1) de séquences prédéterminées, et
- un troisième niveau de détection (N3) dans lequel ledit module de commande (901) est activé, ladite interface homme-machine (90) étant apte à délivrer une instruction de commande dudit appareil électroménager (9) si ledit geste détecté correspond à une desdites séquences prédéterminées dudit premier groupe (G1) de séquences prédéterminées et/ou dudit deuxième groupe (G2) de séquences prédéterminées.

2. Procédé de commande selon la revendication 1, **caractérisé en ce que** ladite zone de détection prédéfinie (8) présente une forme pyramidale s'étendant entre un sommet (80) porté par ladite interface homme-machine (90) et une base (81) située à une distance normale audit sommet (80) comprise entre 30 et 70 cm, préférentiellement 50 cm, ladite base (81) s'étendant sur une longueur comprise entre 20cm et 40cm, préférentiellement 30cm, ladite base (81) s'étendant sur une largueur comprise entre 20cm et 40cm, préférentiellement 30cm, ladite base (81) étant centrée sur une normale (N) à ladite interface homme machine (90).

3. Procédé de commande selon l'une des revendications 1 à 2, **caractérisé en ce que** ledit module d'acquisition (900) est configuré pour transmettre audit module de commande (901) lesdites séquences prédéterminées détectables en fonction dudit réglage du niveau de détection de ladite interface homme-machine (90).

4. Procédé de commande selon l'une des revendications 1 à 3, **caractérisé en ce que**, dans lesdits deuxième niveau de détection (N2) et troisième niveau de détection (N3), le module de commande (901) est activé suite à la détection d'un geste correspondant à une séquence prédéfinie de demande de réglage, ledit geste étant réalisé par ladite au moins une main dans ladite zone de détection prédéfinie (8).

5. Procédé de commande selon la revendication 4, **caractérisé en ce que** ladite séquence prédéterminée de demande de réglage comprend :
- une première partie (P1) de geste détecté dans laquelle le mouvement consiste en un rapprochement vers ladite interface homme-machine (90) depuis une distance normale à ladite interface homme-machine (90) supérieure à 200mm jusqu'à une distance normale à ladite interface homme-machine (90) comprise entre 8mm et 200mm, puis
- une deuxième partie (P2) de geste détecté dans laquelle le mouvement consiste en un écartement de ladite interface homme-machine (90) jusqu'à une distance normale à ladite interface homme-machine (90) maximale inférieure 200mm en un temps compris entre 50ms et 750ms, puis
- une troisième partie (P3) de geste détecté dans laquelle ledit mouvement consiste en un rapprochement vers ladite interface homme-machine (90) jusqu'à une distance normale à ladite interface homme-machine (90) minimale supérieure à 8mm en un temps compris entre 50ms et 750ms, puis
- une quatrième partie (P4) de geste détecté dans laquelle le mouvement consiste en un écartement de ladite interface homme-machine (90) d'une distance normale à ladite interface homme-machine (90) depuis une distance comprise entre 8mm et 200mm jusqu'à une distance normale à ladite interface homme-machine (90) supérieure à 200mm.

6. Procédé de commande selon l'une des revendications précédentes, **caractérisé en ce que** le premier groupe (G1) de séquences prédéterminées comprend des séquences prédéterminées dans lesquelles le au moins un mouvement prédéterminé est exclusivement rectiligne et comprend un écartement de ladite interface homme-machine (90) d'une distance normale à ladite interface homme-machine (90) comprise entre 150mm et 350mm et/ou un rapprochement de ladite interface homme-machine (90) d'une distance normale à ladite interface homme-machine (90) comprise entre 150mm et 350mm et/ou un mouvement rectiligne dans un plan parallèle à ladite interface homme-machine (90).

7. Procédé de commande selon l'une des revendications précédentes, **caractérisé en ce que** ledit premier groupe (G1) de séquences prédéterminées comprend :
- une fonction d'urgence de l'appareil électroménager ;
- un réglage d'un niveau de puissance ;
- un réglage de temps ;
- un réglage d'un paramètre ;
- un choix de programme ;
- une opération de l'interface de commande ;
- une sélection d'un élément de l'appareil électroménager.

8. Procédé de commande selon l'une des revendications précédentes, **caractérisé en ce que** le deuxième groupe (G2) de séquences prédéterminées comprend des séquences prédéterminées dans lesquelles le au moins un mouvement prédéterminé est au moins partiellement rotatif par rapport à un axe normal à ladite interface homme-machine (90) à une distance normale à ladite interface homme-machine (90) comprise entre 150mm et 300mm.

9. Procédé de commande selon l'une des revendications précédentes, **caractérisé en ce que** ledit deuxième groupe (G2) de séquences prédéterminées comprend ledit premier groupe (G1) de séquences prédéterminées et comprend en outre :
- un changement de paramètre à régler ;
- un réglage d'une minuterie.
- un choix de programme d'utilisation de l'appareil électroménager.

10. Interface homme-machine (90) destinée à mettre en oeuvre un procédé (100) de commande d'un appareil électroménager selon l'une des revendications 1 à 9, adaptée à commander ledit appareil électroménager (9) en réponse à un geste effectué par au moins une main d'un utilisateur, ladite interface homme-machine (90) comprenant :
- un module d'acquisition (900) muni d'un capteur temps de vol (9000) et d'un microprocesseur (9001) ;
- un module de commande (901) configuré pour délivrer ladite instruction de commande dudit appareil électroménager, et
- un module de stockage (902) de séquences prédéterminées.

11. Interface homme-machine selon la revendication précédente, **caractérisée en ce qu'**elle comprend un dispositif d'affichage et/ou de saisie (92) pour un utilisateur.

12. Appareil électroménager comprenant une interface homme-machine (90) selon l'une des revendications 10 ou 11.

13. Appareil électroménager selon la revendication 12, ledit appareil ménager appartenant au groupe comprenant :
- une table de cuisson ;
- un four ;
- un lave-linge ;
- un lave-vaisselle ;
- une hotte.
